# EUROPÄISCHE PATENTANMELDUNG

(11) **EP 4 559 742 A1**
(43) Veröffentlichungstag der Anmeldung: **28.05.2025**
(21) Anmeldenummer: 23212358.8
(22) Anmeldetag: 27.11.2023
(51) Int. Cl.: B60N 2/02, B60N 2/06

(54) **FAHRZEUGSITZ MIT LÄNGSVERSTELLEINRICHTUNG**

(71) Anmelder: Adient US LLC, Plymouth, MI 48170 (US)
(72) Erfinder: QUAST, Ingo, 40477 Duesseldorf (DE); SPRENGER, Erik, 42929 Wermelskirchen (DE); ZALAVARI, Kornel, 42659 Solingen (DE); MAYER, Thomas, 42477 Radevormwald (DE)
(74) Vertreter: Liedtke & Partner Patentanwälte

(57) **Zusammenfassung**

Der erfindungsgemäße Fahrzeugsitz (100) mit einer Längsverstelleinrichtung (110) umfasst zumindest
- eine Schienenanordnung (112) mit einer festen Unterschiene (116) und einer zur Unterschiene (116) verstellbaren Oberschiene (114),
- mindestens ein durch eine Antriebseinrichtung (120) antreibbares Antriebsrad (124), das eingerichtet ist, auf einer dem Antriebsrad (124) zugewandten Reibfläche (126) der Unterschiene (116) abzurollen und die Oberschiene (114) relativ zu der Unterschiene (116) zu verstellen, sowie
- mindestens ein Steuermodul (122), das zur Montage oder Demontage des Fahrzeugsitzes (100) an der Längsverstelleinrichtung (110) eingerichtet ist,
wobei das Steuermodul (122) zusätzlich eingerichtet ist, die Antriebseinrichtung (120) in eine abgesenkte Position (200) oder in eine angehobene Position (202) zu bringen.

## Beschreibung

Die Erfindung betrifft einen Fahrzeugsitz mit einer Längsverstelleinrichtung.

### Stand der Technik

Eine Längsverstelleinrichtung für einen Fahrzeugsitz umfasst im Allgemeinen zwei im Abstand voneinander angeordnete Schienenpaare, die jeweils aus zwei Schienen, einer dem Sitz zugeordneten Oberschiene und einer dem Boden eines Fahrzeugs zugeordneten Unterschiene, aufgebaut sind. Die Längsverstelleinrichtung umfasst darüber hinaus wenigstens ein federbelastetes, bewegbares Verriegelungsteil, das an der Oberschiene gehaltert ist und in einer Verriegelungsstellung eine Bewegung der Oberschiene in der Unterschiene sperrt. Dabei kann die Unterschiene Durchbrüche aufweisen, während die Oberschiene mit Öffnungen versehen ist und das Verriegelungsteil an seinen beiden gegenüberliegenden Längsseiten Vorsprünge trägt, die in der Verriegelungsstellung durch eine Feder sowohl in die Öffnungen, als auch in die Durchbrüche bewegbar sind. Eine derartige Längsverstelleinrichtung ist beispielsweise aus dem Europäischen Patent EP 1 227 950 B1 bekannt.

### Aufgabe

Der Erfindung liegt die Aufgabe zu Grunde, einen Fahrzeugsitz der eingangs genannten Art zu verbessern, insbesondere einen hinsichtlich eines Einbaus und Ausbaus aus dem Fahrzeug verbesserten Fahrzeugsitz bereitzustellen.

### Lösung

Diese Aufgabe wird erfindungsgemäß gelöst durch einen Fahrzeugsitz mit den Merkmalen des Anspruchs 1.

Der erfindungsgemäße Fahrzeugsitz umfasst in Kombination mit einer Längsverstelleinrichtung, die zumindest eine Schienenanordnung mit einer festen Unterschiene und einer zur Unterschiene verstellbaren Oberschiene aufweist, mindestens ein durch eine Antriebseinrichtung antreibbares Antriebsrad, das eingerichtet ist, auf einer dem Antriebsrad zugewandten Kontaktfläche der Unterschiene abzurollen und die Oberschiene relativ zu der Unterschiene zu verstellen, und mindestens ein Steuermodul (auch Montagemodul genannt), das zur Montage des Fahrzeugsitzes an der Längsverstelleinrichtung eingerichtet ist. Das Steuermodul ist eingerichtet, insbesondere bei einer Montage des Fahrzeugsitzes an der Längsverstelleinrichtung und/oder bei einer Demontage des Fahrzeugsitzes von der Längsverstelleinrichtung, die Antriebseinrichtung in eine abgesenkte Position beziehungsweise in eine angehobene Position zu bringen.

Dadurch, dass das Steuermodul eingerichtet ist, die Antriebseinrichtung in verschiedene Positionen zu stellen, kann die Antriebseinrichtung bei einer Montage des Fahrzeugsitzes an der Längsverstelleinrichtung in eine Verstellbereitschaft und bei einer Demontage des Fahrzeugsitzes von der Längsverstelleinrichtung in eine sichere Position, insbesondere eine Parkposition oder Ruheposition, gestellt werden.

Mit anderen Worten: Das Steuermodul ist als ein Hebemechanismus ausgebildet und eingerichtet, bei einem Ausbau oder einer Demontage des Fahrzeugsitzes von der Längsverstelleinrichtung die Antriebseinrichtung automatisch anzuheben oder in eine angehobene Position (Parkposition oder Ruheposition) zustellen und bei einem Einbau oder einer Montage des Fahrzeugsitzes an der Längsverstelleinrichtung die Antriebseinrichtung automatisch abzusenken oder in eine abgesenkte Position zu stellen.

Beispielsweise ist das Steuermodul eingerichtet, die Antriebseinrichtung in die abgesenkte Position für einen Antriebseingriff mit der Längsverstelleinrichtung zu bringen.

Dadurch, dass das Steuermodul zusätzlich eingerichtet ist, die Antriebseinrichtung in Antriebseingriff mit der Längsverstelleinrichtung zu bringen, ist schon bei der Montage, insbesondere beim Einbau, des Fahrzeugsitzes an der Längsverstelleinrichtung ein einfaches und sicheres Inkontaktbringen von Antriebseinrichtung und Längsverstelleinrichtung ermöglicht.

Vorteilhafte Ausgestaltungen, welche einzeln oder in Kombination miteinander eingesetzt werden können, sind Gegenstand der Unteransprüche.

Hierzu können das Steuermodul und die Antriebseinrichtung miteinander bewegungsgekoppelt sein. Insbesondere sind das Steuermodul und die Antriebseinrichtung derart miteinander gekoppelt, dass bei einer Montage des Fahrzeugsitzes an der Längsverstelleinrichtung, insbesondere an einer Oberschiene, ein in Richtung der Längsverstelleinrichtung wirkendes Drehmoment am Steuermodul über das Steuermodul auf die Antriebseinrichtung wirkt, so dass diese in eine abgesenkte Position auf die Längsverstelleinrichtung, insbesondere auf die Unterschiene, stellbar oder gestellt ist.

Dadurch, dass die Antriebseinrichtung mittels des Steuermoduls in eine abgesenkte Position auf die Unterschiene stellbar ist, kommt das Antriebsrad, insbesondere ein Antriebsreibrad, in Kontakt mit der Unterschiene. Insbesondere wird die Antriebseinrichtung durch das automatische Absenken bei der Montage an der Schienenanordnung mit dem Schienenpaar, beispielsweise mit der Unterschiene, in Eingriff, beispielsweise in einen Reibeingriff, gebracht.

Die Antriebseinrichtung kann als separate Antriebseinheit ausgebildet sein. Eine solche Antriebseinheit kann vorgesehen sein, die bewegbare Oberschiene zur Verstellung relativ zur Unterschiene anzutreiben.

Beispielsweise kann das Steuermodul mit einer Ausgleichsausnehmung, zum Beispiel einem Langloch, einem Schlitz (auch Steuerschlitz genannt) oder dergleichen, versehen sein. Die Ausgleichsausnehmung kann beispielsweise, insbesondere hinsichtlich Form und/oder Abmessungen, derart eingerichtet sein, dass am Anfang einer Montagebewegung des Steuermoduls beim Einbau des Fahrzeugsitzes an der Längsverstelleinrichtung ein Leerhub bewirkt wird. Beispielsweise kann die Länge des Leerhubweges der Länge der Ausgleichsausnehmung entsprechen.

Am Ende des Leerhubweges kann das Steuermodul in Kontakt mit einer Druckseite der Ausgleichsausnehmung gelangen. Mit Weiterbewegung des Steuermoduls wird Druck auf die mit dem Steuermodul bewegungsgekoppelten Antriebseinrichtung ausgeübt, insbesondere über einen Totpunkt einer Haltefeder der Antriebseinrichtung hinaus, bis die Antriebseinrichtung in Folge vollständig in Richtung der Längsverstelleinrichtung abgesenkt ist und das Antriebsrad in Reibeingriff mit der Unterschiene ist.

Zusätzlich können die Antriebseinrichtung und das Steuermodul derart wechselwirkend eingerichtet sein, dass in der abgesenkten Position der Antriebseinrichtung vertikale Abstandstoleranzen zwischen der Antriebseinrichtung und der Längsverstelleinrichtung mittels des Steuermoduls ausgleichbar sind. Beispielsweise können in der abgesenkten Position vertikale Bewegungen der Antriebseinrichtung über die Kopplung von Antriebseinrichtung und Steuermodul, zum Beispiel über ein Koppelelement, in eine Ausgleichsbewegung in der Ausgleichsausnehmung des Steuermoduls übertragbar sein. Mit anderen Worten: Die Ausgleichsausnehmung und das Steuermodul können beispielsweise derart zueinander eingerichtet sein, dass das Koppelelement zum toleranzausgleichenden Absenken der Antriebseinrichtung frei beweglich in der Ausgleichsausnehmung des Steuermoduls gelagert ist. Hierzu kann beispielsweise das Koppelelement in der Ausgleichsausnehmung frei beweglich gelagert sein. Die Ausgleichsausnehmung und das zweite Koppelende können beispielsweise derart zueinander eingerichtet sein, dass das zweite Koppelende zum toleranzausgleichenden Absenken der Antriebeinrichtung frei beweglich in der Ausgleichsausnehmung gelagert ist.

Beispielsweise können das Steuermodul und die Antriebseinrichtung mittels des Koppelelements miteinander bewegungsgekoppelt sein. Zum Beispiel kann das Koppelelement als ein Koppeldraht oder eine Koppelstange ausgebildet sein. Insbesondere ein als Koppelstange oder fester Koppeldraht ausgebildetes Koppelelement ermöglicht eine stabile Umsetzung einer Drehbewegung des Steuermoduls in eine lineare Absenkbewegung der Antriebseinrichtung.

Das Koppelelement kann beispielsweise einerseits an dem Steuermodul und andererseits an der Antriebseinrichtung angelenkt sein. Ein solches beidseitig angelenktes Koppelelement ermöglicht die Verwendung von vorhandenen, einfach aufgebauten Baugruppen, wie dem Steuermodul (auch Easy-Mount-Modul genannt), des Fahrzeugsitzes. Das Steuermodul kann beispielsweise als eine Wippe oder ein Steuerhebel oder dergleichen ausgebildet sein. Das Steuermodul weist zwei von einer Drehachse einander gegenüberliegend abgehende Steuerarme auf, die zusätzlich zur Montage des Fahrzeugsitzes an der Längsverstelleinrichtung eingerichtet sind, die Antriebseinrichtung in Antriebseingriff mit der Längsverstelleinrichtung zu bringen oder in eine angehobene Parkposition zu bringen.

Jeder der Wippenarme oder Steuerarme kann eine zugehörige Steuerfläche aufweisen. Hierdurch können mittels des Steuermoduls verschiedene Montagefunktionen unterstützt werden. Eine erste Steuerfläche ist insbesondere eingerichtet, das Steuermodul mit einem Exzenter eines Montagemoduls auf Anschlag und Mitnahme zu koppeln. Eine zweite Steuerfläche kann beispielsweise eingerichtet sein, das Steuermodul mit einem Steckermodul zur elektrischen Verbindung auf Anschlag und Mitnahme zu koppeln.

Beispielsweise kann das Koppelelement an einem ersten, dem Steuermodul zugewandten Koppelende ein zweifach abgewinkeltes Halteende und an einem gegenüberliegenden zweiten, der Antriebseinrichtung zugewandten Koppelende ein einfach abgewinkeltes Halteende aufweisen. Solche abgewinkelten Halteenden ermöglichen eine einfache Montage sowie eine stabile Kopplung. Beispielsweise kann das Koppelelement an einem dem Steuermodul zugewandten Exzenter der Antriebseinrichtung angelenkt sein. Hierdurch sind das Steuermodul und die Antriebseinrichtung wechselwirkend miteinander koppelbar.

Bei einer Demontage des Fahrzeugsitzes von der Längsverstelleinrichtung kann die Antriebseinrichtung mittels des Steuermoduls beispielsweise in eine angehobene Position bringbar, in der angehobenen Position gehalten oder haltbar sein. Hierbei kann das Steuermodul zusätzlich in einer ersten Lage verriegelt sein. Dadurch ist die Antriebseinrichtung stabil und sicher in der angehobenen Position im demontierten oder ausgebauten Fahrzeugsitz gehalten. Beispielsweise kann die Antriebseinrichtung mittels einer bistabilen Feder und/oder dem Koppelelement in der angehobenen Position gehalten oder haltbar sein. Dazu ist das Steuermodul gegen eine Bewegung gesperrt. Insbesondere kann das Steuermodul durch das Steckermodul in seiner angehobenen Stellung gesichert, insbesondere kraftgesichert, gehalten und damit gegen eine Bewegung gesperrt sein.

Zusätzlich kann das Koppelelement, insbesondere der Koppeldraht oder die Koppelstange, vorgespannt gehalten, zum Beispiel auf Zug mittels einer Zugfeder oder auf Druck mittels einer Druckfeder, kraftbelastet sein.

Zusätzlich kann die Ausgleichsausnehmung beispielsweise eingerichtet sein, ein Anheben der Antriebseinrichtung in die angehobene Position zu begrenzen.

Zusammenfassend und mit anderen Worten ausgedrückt ist durch die Erfindung ein Fahrzeugsitz bereitgestellt, der bei Ausbau oder Entnahme des Fahrzeugsitzes aus dem Fahrzeug und damit bei einer Demontage von der Längsverstelleinrichtung die Antriebseinheit, insbesondere die Reibradantriebseinheit, automatisch anhebt und optional verriegelt und bei Einbau oder Montage des Fahrzeugsitzes in das Fahrzeug und damit bei einer Montage an der Längsverstelleinrichtung die Antriebseinheit automatisch absenkt, um das Reibrad in Kontakt mit der Schiene zu bringen. Zu diesem Zwecke wird ein beispielsweise als Koppelstange ausgebildetes Koppelelement zwischen dem Steuermodul, ausgebildet als Wippe oder Steuerhebel, und einem Exzenter der Reibradantriebseinheit eingeführt. Das beispielsweise als Koppelstange ausgebildete Koppelelement, insbesondere ein festes Koppelelement, ermöglicht zwei Betriebszustände der Antriebseinheit und zwar angehoben, wenn der Fahrzeugsitz ausgebaut oder geparkt ist, oder abgesenkt, wenn der Fahrzeugsitz verstellbereit ist (= Verstell-Bereitschaft). Durch die Erfindung wird ein einbaubarer und ausbaubarer Fahrzeugsitz bereitgestellt, der an einer im Fahrzeug angeordneten Längsverstelleinrichtung koppelbar/befestigbar oder von dieser entkoppelbar/lösbar ist.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung nach dem Stand der Technik,
- Fig. 2:: eine perspektivische Ansicht einer Antriebseinrichtung und eines Steuermoduls, die wechselwirkend miteinander gekoppelt sind,
- Fig. 3:: eine vergrößerte Draufsicht auf das Steuermodul gemäß Figur 2 im Bereich einer Ausgleichsausnehmung,
- Fig. 4:: eine Draufsicht auf die miteinander gekoppelte Antriebseinrichtung und das Steuermodul bei einer Montage an einer Längsverstelleinrichtung,
- Fig. 5:: eine vergrößerte Draufsicht auf das Steuermodul gemäß Figur 4 im Bereich der Ausgleichsausnehmung,
- Fig. 6:: eine Draufsicht auf die miteinander gekoppelte Antriebseinrichtung und das Steuermodul nach der Montage und in abgesenkter Position der Antriebseinrichtung,
- Fig. 7:: eine vergrößerte Draufsicht auf das Steuermodul gemäß Figur 6 im Bereich der Ausgleichsausnehmung,
- Fig. 8:: eine Draufsicht auf die Antriebseinrichtung in angehobener Position,
- Fig. 9:: eine Draufsicht auf die Antriebseinrichtung in abgesenkter Position,
- Fig. 10:: eine perspektivische Darstellung der gekoppelten Antriebseinrichtung und des Steuermoduls mit einem Steckermodul im Eingriff miteinander,
- Fig. 11:: eine perspektivische Darstellung der gekoppelten Antriebseinrichtung und des Steuermoduls mit einem Steckermodul vor einem Eingriff am Steuermodul,
- Fig. 12:: in perspektivischer Darstellung ein Steckermodul, und
- Fig. 13:: in perspektivischer Darstellung ein Steuermodul.

Einander entsprechende Teile sind in allen Figuren mit den gleichen Bezugszeichen versehen.

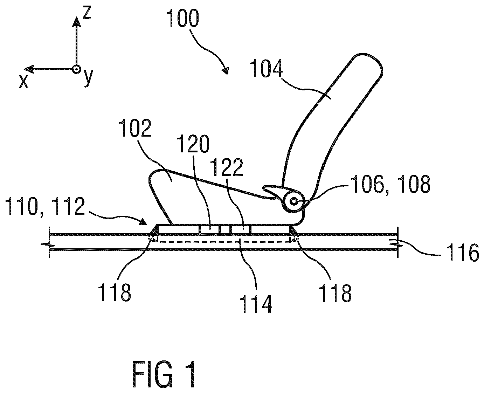

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Insbesondere kann die Längsverstelleinrichtung 110 Teil eines Fahrzeugs sein und der Fahrzeugsitz 100 an dieser Längsverstelleinrichtung 110 lösbar befestigbar sein.

Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 und das Sitzteil 102 können mittels lösbarer Befestigungen 118, insbesondere bewegliche Befestigungsklauen oder bewegliche Befestigungshaken, miteinander verbunden sein. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

Der Fahrzeugsitz 100 kann eine Antriebseinrichtung 120 umfassen, die eingerichtet ist, die Oberschiene 114 relativ zur Unterschiene 116 zu verstellen.

Des Weiteren kann der Fahrzeugsitz 100 ein Steuermodul 122 umfassen, das zur Montage (auch Einbau genannt) oder Demontage (auch Ausbau genannt) des Fahrzeugsitzes 100 an der Längsverstelleinrichtung 110 ausgebildet ist.

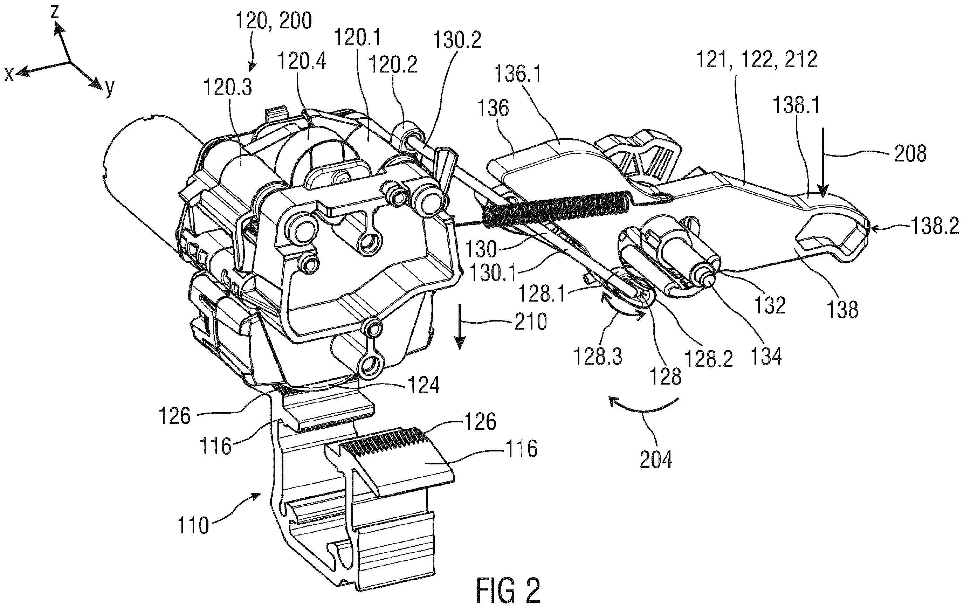

Figur 2 zeigt eine perspektivische Ansicht der Antriebseinrichtung 120 und des Steuermoduls 122, die wechselwirkend miteinander gekoppelt sind.

Je Fahrzeugsitz 100 ist mindestens eine Antriebseinrichtung 120 und ein Steuermodul 122 vorgesehen. Auch können je Schienenpaar jeweils eine Antriebseinrichtung 120 und ein Steuermodul 122 und somit je Fahrzeugsitz 100 bei zwei Schienenpaaren zwei Antriebseinrichtungen 120 und zwei Steuermodule 122 vorgesehen sein.

Nachfolgend wird die Erfindung an einer Antriebseinrichtung 120 und einem Steuermodul 122 näher beschrieben.

Das Steuermodul 122 (auch Easy-Mount-Modul genannt) ist zur Montage oder Demontage des Fahrzeugsitzes 100 an der Längsverstelleinrichtung 110 eingerichtet und ist hierzu beispielsweise mit den Befestigungen 118 (dargestellt in Figur 1) zum Entriegeln oder Verriegeln dieser an der Oberschiene 114 gekoppelt.

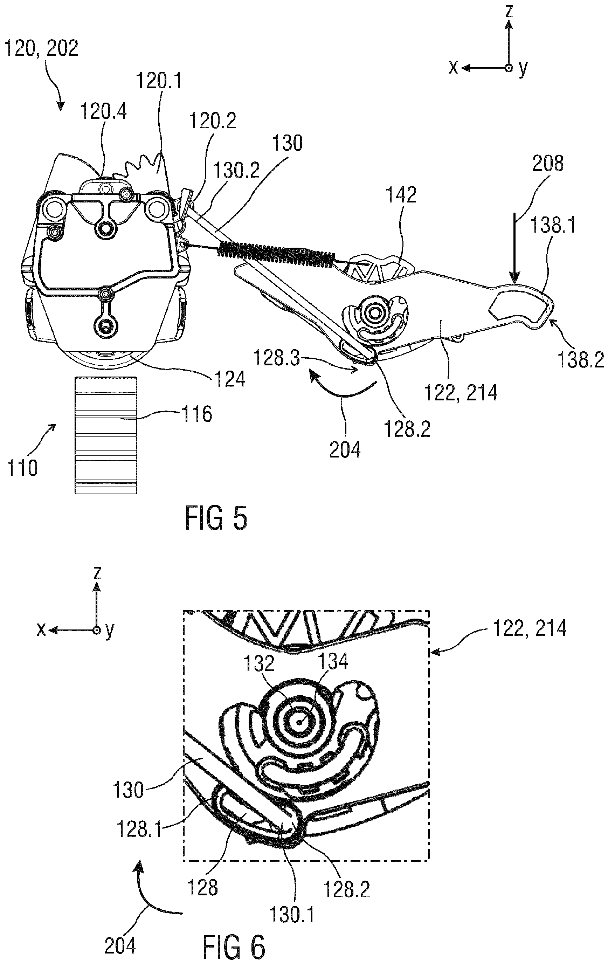

Erfindungsgemäß ist das Steuermodul 122 zusätzlich eingerichtet, die Antriebseinrichtung 120 in eine abgesenkte Position 200 (dargestellt in Figuren 2, 4 und 10) oder in eine angehobene Position 202 (dargestellt in Figuren 5, 7 und 9) zu bringen.

Mittels des Steuermoduls 122 ist die Antriebseinrichtung 120 in verschiedene Positionen stellbar. Zum Beispiel kann die Antriebseinrichtung 120 bei einer Montage des Fahrzeugsitzes 100 an der Längsverstelleinrichtung 110 in eine Verstellbereitschaft in die abgesenkte Position 200 und bei einer Demontage des Fahrzeugsitzes 100 von der Längsverstelleinrichtung 110 in die angehobene Position 202, eine sichere Position, insbesondere eine Parkposition oder Ruheposition, gestellt werden.

Beispielsweise ist das Steuermodul 122 eingerichtet, die Antriebseinrichtung 120 in der abgesenkten Position 200 in Antriebseingriff mit der Längsverstelleinrichtung 110 zu bringen.

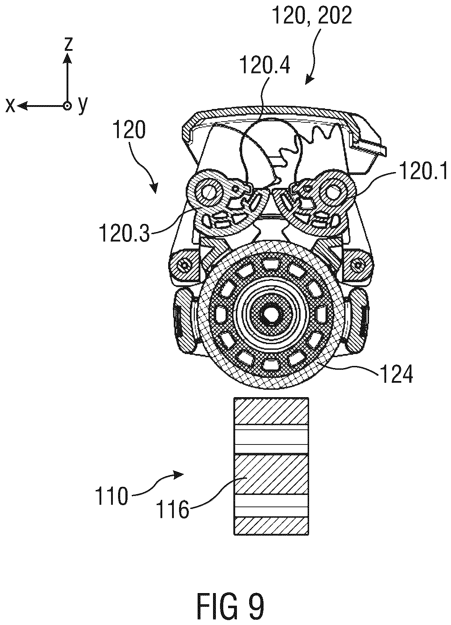

Hierzu können das Steuermodul 122 und die Antriebseinrichtung 120 miteinander bewegungsgekoppelt sein. Insbesondere sind das Steuermodul 122 und die Antriebseinrichtung 120 derart miteinander gekoppelt, dass bei einer Montage des Fahrzeugsitzes 100 an der Längsverstelleinrichtung 110, insbesondere an der Oberschiene 114, ein am Steuermodul 122 wirkendes Drehmoment 20 über dieses Steuermodul 122 auf die Antriebseinrichtung 120 wirkt, so dass diese in die abgesenkte Position 200 (dargestellt in Figuren 2 und 9) auf die Längsverstelleinrichtung 110, insbesondere auf die Unterschiene 116, stellbar oder gestellt ist.

Hierdurch kommt ein Antriebsrad 124, insbesondere ein Antriebsreibrad, in Kontakt mit der Unterschiene 116, insbesondere eine Reibfläche 126. Dadurch wird die Antriebseinrichtung 120, insbesondere das Antriebsrad 124, in Eingriff, beispielsweise in einen Reibeingriff, mit der Längsverstelleinrichtung 110, insbesondere der Unterschiene 116, gebracht.

Die Antriebseinrichtung 120 kann als separate Antriebseinheit ausgebildet sein. Das Steuermodul 122 kann als separate Montageeinheit ausgebildet sein.

Die Antriebseinheit 120 kann vorgesehen sein, die bewegbare Oberschiene 114 zur Verstellung relativ zur Unterschiene 116 anzutreiben.

Beispielsweise kann das Steuermodul 122 mit einer Ausgleichsausnehmung 128 (auch Koppelausnehmung oder Kopplungsausnehmung genannt), zum Beispiel einem Langloch, einem Schlitz (auch Steuerschlitz genannt) oder dergleichen, versehen sein.

Das Steuermodul 122 und die Antriebseinrichtung 120 sind über ein Koppelelement 130 miteinander bewegungsgekoppelt.

Das Koppelelement 130 kann beispielsweise als ein Koppeldraht, eine Koppelstange oder dergleichen ausgebildet sein. Insbesondere ist das Koppelelement 130 als ein starres Element ausgebildet, das endseitig angelenkt und drehbeweglich gelagert ist.

Das Koppelelement 130 kann beispielsweise einerseits an dem Steuermodul 122 und andererseits an der Antriebseinrichtung 120 angelenkt sein.

Das Steuermodul 122 kann beispielsweise als eine Wippe oder als ein Steuerhebel oder dergleichen ausgebildet sein. Bevorzugt ist das Steuermodul 122 in einem Gelenkpunkt 132 um eine Schwenkachse 134 schwenkbar gelagert. Insbesondere ist das Steuermodul 122 in dem Gelenkpunkt 132 schwenkbar gegenüber der Längsverstelleinrichtung 110 gelagert. Die Ausgleichsausnehmung 128 mit endseitigen Anschlagpunkten, Mitnahmepunkten oder Angreifpunkten 128.1, 128.2 und Leerhub 128.3 ist von der, insbesondere zentrischen, Schwenkachse 134 beabstandet. Die Ausgleichsausnehmung 128 ist somit exzentrisch angeordnet.

Das Steuermodul 122 weist zwei von einer Schwenkachse 134 im Gelenkpunkt 132 einander gegenüberliegend abgehende Steuerarme 136 und 138 (auch Eingriffsarme genannt) auf, die insbesondere eingerichtet sind, die Antriebseinrichtung 120 in die abgesenkte Position 200 und damit in einen Antriebseingriff mit der Längsverstelleinrichtung 110 zu bringen oder in die angehobene Position 202 (auch Parkposition oder Ausbauposition genannt) zu bringen.

Jeder der Wippenarme oder Steuerarme 136 und 138 kann eine zugehörige Steuerfläche 136.1 beziehungsweise 138.1 aufweisen. Hierdurch können mittels des Steuermoduls 122 verschiedene Montagefunktionen unterstützt werden.

Der Steuerarm 136 ist unter anderem eingerichtet, das Steuermodul 122 mit der Antriebseinrichtung 120 zu koppeln. Hierzu ist ein dem Steuermodul 122 zugewandtes erstes Koppelende 130.1 des Koppelelements 130 in der Ausgleichsausnehmung 128 frei beweglich gelagert.

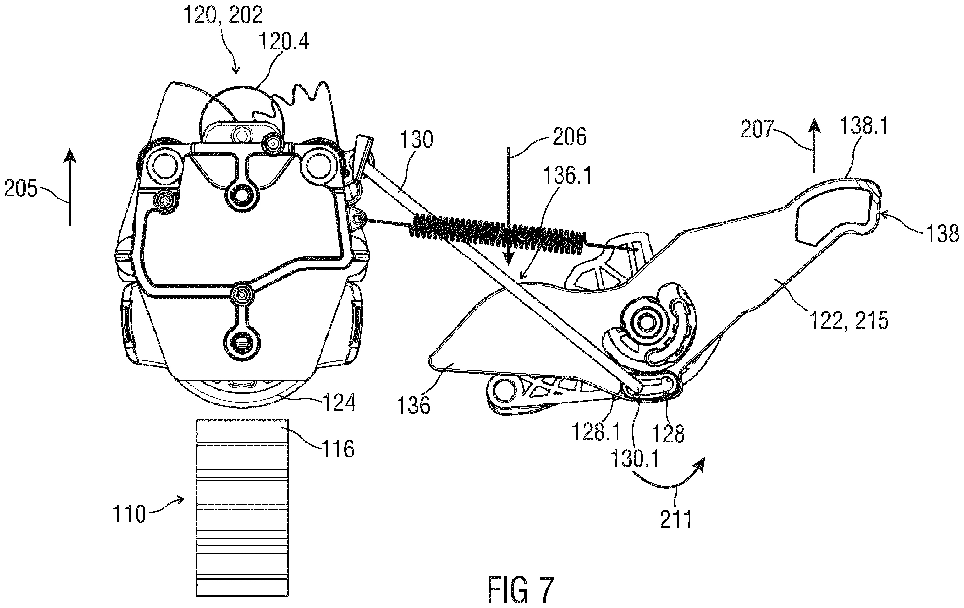

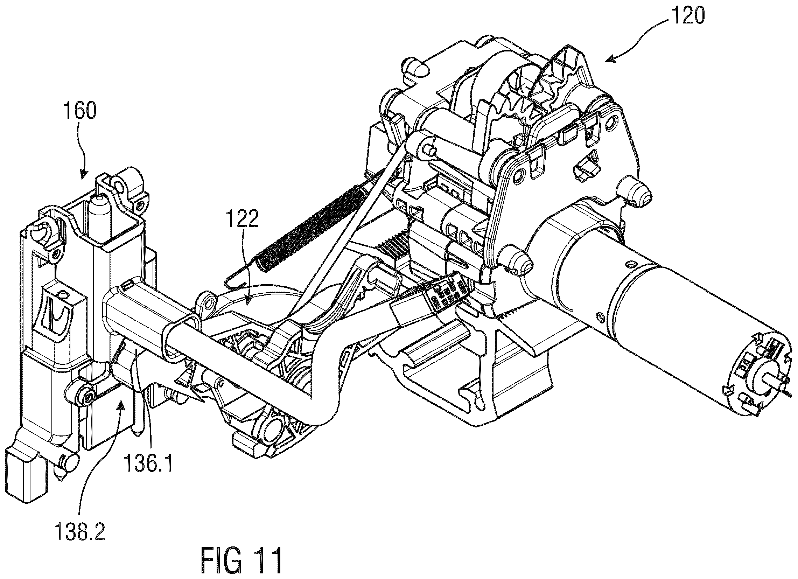

Eine erste Steuerfläche 136.1 ist insbesondere eingerichtet, bei einer Entnahme des Fahrzeugsitzes 100 von der Längsverstelleinrichtung 110 mit einem nicht dargestellten Exzenter eines Montagemoduls (auch Easy-Mount-Modul genannt) für den Fahrzeugsitz 100 zu koppeln, um das Steuermodul 122 am Steuerarm 136 durch eine nach unten gerichtete Kraft gemäß Pfeil 206 zu bewegen, insbesondere zu drücken, und infolgedessen am Steuerarm 138 durch eine nach oben gerichtete Kraft gemäß Pfeil 207 zu bewegen, wie dies in Figur 7 näher gezeigt und zur Figur 7 näher beschrieben wird, und hierbei das Steckermodul 160 (dargestellt in Figur 11) außer Eingriff zu bringen und die Antriebseinrichtung 120 in die angehobene Position 202 gemäß Pfeil 205 zu bewegen.

Figur 2 zeigt die Antriebseinrichtung 120 in der abgesenkten Position 200 und das Steuermodul 122 in einer ersten Steuerstellung 212, insbesondere in der die abgesenkte Position 200 der Antriebseinrichtung 120 sichernden, insbesondere kraftsichernden, ersten Steuerstellung 212.

Beim Einbau des Fahrzeugsitzes 100 in das Fahrzeug und an die Längsverstelleinrichtung 110 erfährt das Steuermodul 122 durch eine einwirkende Kraft, insbesondere eine Federkraft, gemäß Pfeil 208 des Steckermoduls 160 nach dessen Entriegelung ein einwirkendes Drehmoment gemäß Pfeil 204, zum Beispiel aufgrund einer Kopplung 138.2 von Steckermodul 160 und Steuermodul 122, insbesondere eines Eingriffs des Steckermoduls 160 an dem Steuerarm 138.

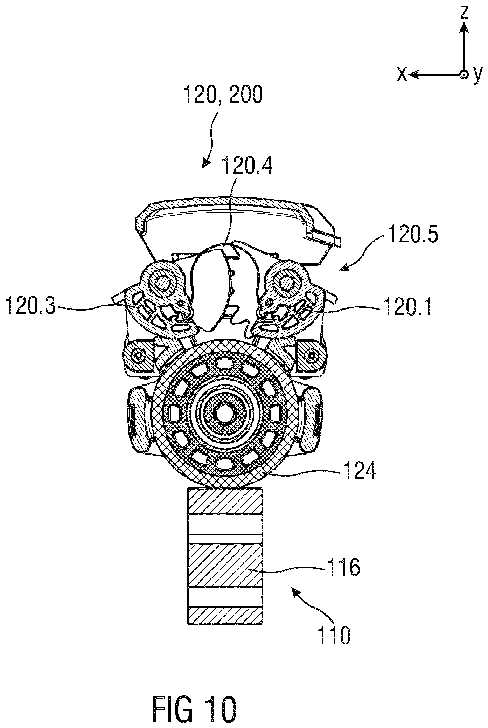

Eine zweite Steuerfläche 138.1 oder die Kopplung 138.2 kann beispielsweise eingerichtet sein, beim Wiedereinbau oder Einbau des Fahrzeugsitzes 100 mit dem Steckermodul 160 (dargestellt in Figur 10, auch Stecker genannt) auf Anschlag und Mitnahme zu koppeln, um das Steuermodul 122, insbesondere die Wippe, am Steuerarm 138, insbesondere an der zweiten Steuerfläche 138.1 oder Kopplung 138.2, durch die nach unten gerichtete Kraft gemäß Pfeil 208 zu bewegen, insbesondere zu drücken.

Vor oder bei einem Einbau des Fahrzeugsitzes 100 ist das Steckermodul 160 zunächst angehoben und vorgespannt, insbesondere mit gespannten Federmitteln (nicht dargestellt) verriegelt. Nach vollständiger Kopplung des Fahrzeugsitzes 100 mit der Längsverstellrichtung 110, insbesondere nach Befestigung an den Oberschienen 114, wird das Steckermodul 160 entriegelt. Das vorgespannte Steckermodul 160 entspannt und aufgrund der Federkräfte der Federmittel des Steckermoduls 160 wird dieses linear abwärts zur elektrischen Kopplung mit einer nicht dargestellten Buchse an der Längsverstelleinrichtung 110 bewegt. Dabei gelangt das linear sich in Richtung der Längsverstelleinrichtung 110 bewegende Steckermodul 160 in Eingriff an der zweiten Steuerfläche 138.1 oder der Kopplung 138.2 und drückt das als Wippe ausgebildete Steuermodul 122 nieder gemäß Pfeil 208.

Diese Bewegung des als Wippe ausgebildeten Steuermoduls 122 bewirkt einen Druck auf das als Koppelstange, insbesondere als Druckstange oder Schubstange, ausgebildete Koppelelement 130, nachdem ein Leerhub 128.3 in der als Langloch ausgebildeten Ausgleichsausnehmung 128 überwunden wurde oder ist. Dieser Impuls oder diese Kopplung auf Mitnahme leitet die Abwärtsbewegung oder Absenkbewegung der Antriebseinrichtung 120 gemäß Pfeil 210 ein.

Die Kräfte gemäß Pfeile 204, 208 wirken gleichzeitig und bewirken über die Kopplung des Steuermoduls 122 mit der Antriebseinrichtung 120 über das Koppelelement 130 eine Absenkung der Antriebseinrichtung 120 in die abgesenkte Position 200 gemäß Pfeil 210.

Beispielsweise kann das Koppelelement 130 an dem zweiten, der Antriebseinrichtung 120 zugewandten Koppelende 130.2 ein einfach abgewinkeltes Halteende und an dem ersten, gegenüberliegenden und dem Steuermodul 122 zugewandten Koppelende 130.1 ein zweifach abgewinkeltes Halteende aufweisen. Solche abgewinkelten Halteenden ermöglichen eine einfache Montage sowie eine stabile Kopplung. Beispielsweise kann das Koppelelement 130 an einem dem Steuermodul 122 zugewandten Exzenter 120.1 der Antriebseinrichtung 120 angelenkt sein. Dabei kann das zweite Koppelende 130.2 beispielsweise an einem Einhängepunkt 120.2 der Antriebseinrichtung 120 befestigt sein. Hierzu ist das zweite Koppelende 130.2 als ein einfach abgewinkeltes Ende ausgebildet, das in dem Einhängepunkt 120.2 des Exzenters 120.1 angelenkt ist. Am Einhängepunkt 120.2 kann eine Kunststofflasche vorgesehen sein, die als Sicherung gegen seitliches Verschieben (in Querrichtung y) vorgesehen ist.

Am ersten Koppelende 130.1 ist eine zweifache Abwinkelung vorgesehen, die derart eingerichtet ist, dass das erste Koppelende 130.1 verliersicher und freibeweglich in der Ausgleichsausnehmung 128 gehalten ist.

Durch das beidseitig angelenkte Koppelelement 130 sind das Steuermodul 122 und die Antriebseinrichtung 120 wechselwirkend miteinander koppelbar oder gekoppelt.

Die Antriebseinrichtung 120 kann beispielsweise zusätzlich zum Exzenter 120.1 einen weiteren Exzenter 120.3 umfassen. Zwischen den beiden Exzentern 120.1 und 120.3 kann ein Federelement 120.4, insbesondere eine Flip-Flop-Feder oder bistabile Feder oder dergleichen, angeordnet sein. Das Federelement 120.4 ist als eine bistabile Feder mit zwei stabilen Endlagen ausgebildet, welche oberhalb und unterhalb einer Totpunktlage bei unterschiedlichen Drehsinn der Exzenter 120.1, 120.3 eingestellt sind. Die Exzenter 120.1 und 120.3 sind direkt miteinander gekoppelt sind, zum Beispiel über eine Getriebeeinheit 120.5, insbesondere eine Stirnradgeradverzahnung eines Zahnradgetriebes (dargestellt in Figur 10).

Oberhalb der Totpunktlage des Federelements 120.4 hält dieses zwischen den beiden Exzentern 120.1, 120.3 angeordnete Federelement 120.4 über die beiden Exzenter 120.1, 120.3 die Antriebseinrichtung 120 angehoben. Unterhalb der Totpunktlage wird die Antriebeinrichtung 120, insbesondere das als Reibrad ausgebildete Antriebsrad 124 über das als Flip-Flop-Feder ausgebildete Federelement 120.4 gegen die Unterschiene 116 gedrückt.

Im Weiteren erfolgt die Beschreibung der Kopplung mittels des Koppelelements 130 zwischen dem Steuermodul 122, zum Beispiel einer Wippe oder einem Steuerhebel, und der Antriebseinrichtung 120, insbesondere einer Reibradantriebseinheit.

Figur 2 zeigt die abgesenkte Position 200 der Antriebseinrichtung 120 und den notwendigen zuvor beschriebenen Bewegungsablauf des Steuermoduls 122 und der mit diesem Steuermodul 122 gekoppelten Antriebseinrichtung 120 in die abgesenkte Position 200.

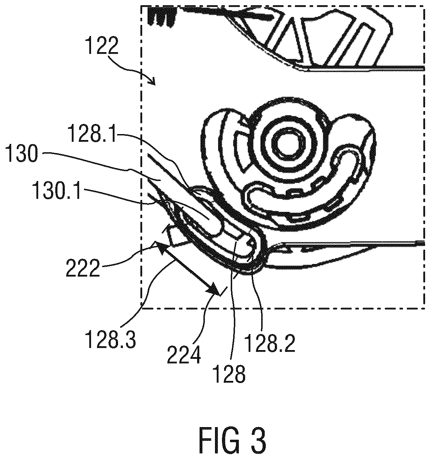

Figur 3 zeigt in vergrößerter Darstellung das Steuermodul 122 gemäß Figur 2. Figur 3 zeigt im Detail die Ausgleichsausnehmung 128 mit den endseitigen Angreifpunkten 128.1, 128.2 als Endanschläge für den möglichen Leerhub 128.3 des Koppelelements 130, insbesondere dessen ersten Koppelendes 130.1, in der Ausgleichsausnehmung 128. Das erste Koppelende 130.1 kann sich dabei in beide Richtungen 222 und 224 bewegen.

Figur 3 zeigt eine vergrößerte Draufsicht auf das Steuermodul 122 gemäß Figur 2 im Bereich der Ausgleichsausnehmung 128. Die Ausgleichsausnehmung 128 ist kreisbogenförmig oder bogenförmig ausgebildet. Die Ausgleichsausnehmung 128 erstreckt sich in Längsrichtung x bogenförmig oder kreisbogenförmig.

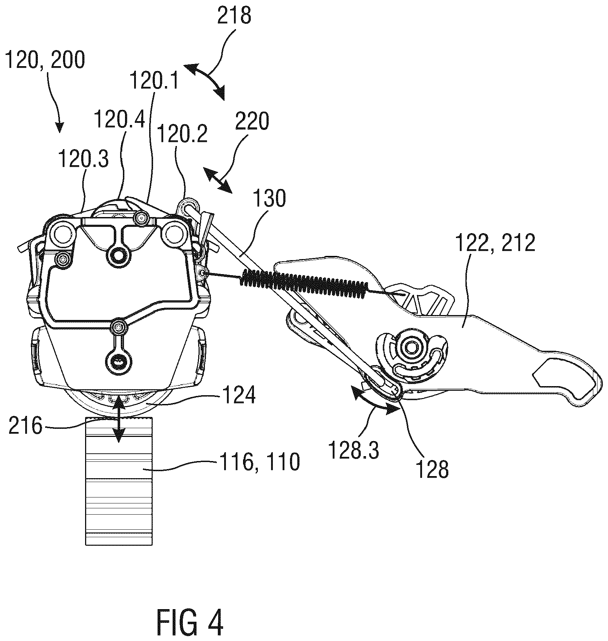

Die Ausgleichsausnehmung 128 weist endseitig jeweils einen Angreifpunkt 128.1 und 128.2 auf. Ausgleichsbewegungen 220 (dargestellt in Figur 4) des Koppelelements 130 werden entlang der Ausgleichsausnehmung 128 ausgeführt. Die Ausgleichsbewegungen 220 werden durch die Angreifpunkte 128.1 und 128.2 begrenzt.

Figur 4 zeigt eine weitere Darstellung der Antriebseinrichtung 120 in der abgesenkten Position 200 und das Steuermodul 122 in der die Antriebseinrichtung 120 sichernden ersten Steuerstellung 212.

Figur 4 zeigt die miteinander gekoppelte Antriebseinrichtung 120 und das Steuermodul 122 nach der Montage und in abgesenkter Position 200 der Antriebseinrichtung 120.

In der erreichten abgesenkten Position 200 (auch Funktionslage genannt) der Antriebseinrichtung 120, insbesondere des Antriebsrades 124, müssen vertikale Abstandstoleranzen 216 zwischen Antriebseinrichtung 120, insbesondere dem Antriebsrad 124, und der Längsverstelleinrichtung 110, insbesondere der Unterschiene 116, ausgeglichen werden können.

Dies kann beispielsweise mittels der federbelasteten Exzenter 120.1, 120.3 ausgeführt werden. Eine einhergehende Rotation der Exzenter 120.1, 120.3 gemäß Pfeil 218 wird über den Einhängepunkt 120.2 (auch Koppeleinhängung genannt) des Koppelelements 130 am gekoppelten Exzenter 120.1 auf das Koppelelement 130 übertragen. Dabei übt das Koppelelement 130 eine Ausgleichsbewegung 220 aus. Damit diese Ausgleichsbewegung 220 des Koppelelements 130 möglich ist, verfügt das Steuermodul 122 über die Ausgleichsausnehmung 128. Dabei ist die Ausgleichsbewegung 220 des Koppelelements 130 infolge der vertikalen Abstandstoleranzen 216 begrenzt durch die Endpunkte oder Angreifpunkte 128.1, 128.2 und den Leerhub 128.3 der Ausgleichsausnehmung 128.

Figur 5 zeigt die Antriebseinrichtung 120 in der angehobenen Position 202 und das Steuermodul 122 in einem Zustand vor einem Absenken der Antriebseinrichtung 120 aus dieser angehobenen Position 202. Das Steuermodul 122 ist in die zweite Steuerstellung 214 und somit in eine Zwischenstellung gebracht oder gestellt.

Diese zweite Steuerstellung 214 (Zwischenstellung) wird für die Vorbereitung der Absenkung der Antriebseinrichtung 120 genutzt. Hierbei wurde zunächst der Leerhub 128.3 der am Steuermodul 122 vorgesehenen, zum Beispiel als Langloch ausgebildeten, Ausgleichsausnehmung 128 überwunden.

Nach Überwindung des Leerhubs 128.3 gerät das Koppelelement 130 in Kontakt mit dem zweiten Angreifpunkt 128.2 (auch zweite Druckseite genannt) der Ausgleichsausnehmung 128. Mit dieser Weiterbewegung, insbesondere Drehung, des Steuermoduls 122 in die beschriebene zweite Steuerstellung 214 (Zwischenstellung), wird das Koppelelement 130 am ersten Koppelende 130.1 auf Druck oder alternativ auf Schub oder Zug belastet und bewegt. Diese Kraft wird über das zweite Koppelende 130.2 auf den Einhängepunkt 120.2 des einen gekoppelten Exzenters 120.1 übertragen. In der weiteren Bewegung des Steuermoduls 122 wird der Exzenter 120.1 über den Totpunkt der dort verbauten Anfederung in Form des Federelements 120.4 bewegt. Die Antriebseinrichtung 120 wird in der Folge vollständig abgesenkt. Das heißt, das als Reibrad ausgebildete Antriebsrad 124 setzt auf der Unterschiene 116 auf, wie in Figuren 2 und 4 dargestellt).

Beim Einbau wirken das Steckermodul 160, insbesondere Federkräfte des Steckermoduls 160 (dargestellt in Figur 11), antreibend auf das Steuermodul 122. Insbesondere greift das Steckermodul 160 an der zweiten Steuerfläche 138.1 oder im Bereich der zweiten Steuerfläche 138.1 an der Kopplung 138.2 des zweiten Steuerarms 138 an und drückt das Steuermodul 122 gemäß Pfeil 208 nieder und erzeugt das Drehmoment 204 am Steuermodul 122, wodurch die Antriebseinrichtung 120 in Richtung der Längsverstelleinrichtung 110 gemäß Pfeil 210 abgesenkt wird und abgesenkt bleibt, wie in Figur 2 dargestellt. Das Koppelelement 130 ist dabei auf Druck oder alternativ auf Schub oder Zug, beansprucht.

Die Antriebseinrichtung 120 erhält infolge des Schwenkens des Steuermoduls 122 durch das Drehmoment 204 über das Koppelelement 130 einen initialen Impuls zur Absenkung gemäß Pfeil 210 über den Totpunkt des Federelements 120.4 der Antriebseinrichtung 120 hinaus. Das Federelement 120.4 der Antriebseinrichtung 120 sorgt für den Anpressdruck der Antriebseinrichtung 120 in Richtung der Längsverstelleinrichtung 110, insbesondere in Richtung der Unterschiene 116 (dargestellt in Figur 1). Dabei wird auch die Absenkung der Betätigungseinheit (nicht dargestellt) eingeleitet.

Figur 6 zeigt in vergrößerter Darstellung das Steuermodul 122 gemäß Figur 4. Das Koppelelement 130, insbesondere dessen erstes Koppelende 130.1, ist in Kontakt mit dem zweiten Angreifpunkt 128.2 (auch zweite Druckseite genannt) der Ausgleichsausnehmung 128. Mit Drehung des Steuermoduls 122 um die Schwenkachse 134 am Gelenkpunkt 132 infolge des einwirkenden Drehmoments 204 wird das Koppelelement 130 am ersten Koppelende 130.1 auf Druck oder alternativ auf Schub oder Zug belastet und bewegt. Diese Kraft wird über das zweite Koppelende 130.2 auf den Einhängepunkt 120.2 des einen gekoppelten Exzenters 120.1 übertragen.

Figur 7 zeigt die Antriebseinrichtung 120 in der angehobenen Position 202, welche durch das Steuermodul 122 gesichert, insbesondere kraftgesichert, zum Beispiel durch eine Kraftflusskette von Steckermodul 160 (dargestellt in Figur 11), Steuermodul 122, Koppelelement 130 und Antriebseinrichtung 120 gesichert, ist.

Das Steuermodul 122 steht über die erste Steuerfläche 136.1 bei Entnahme des Fahrzeugsitzes 100 aus dem Fahrzeug in Kontakt zu einem nicht dargestellten Exzenter des nicht dargestellten Easy-Mount-Modules (beispielhaft beschrieben in der älteren Anmeldung DE 10 2023 200 263.9) und wird durch diesen in Pfeilrichtung gemäß Pfeil 206 nach unten gedrückt. Durch die Kopplung von Steuermodul 122 und Antriebseinrichtung 120 wird infolge des Schwenkens des Steuermoduls 122 gemäß Pfeil 211 das Koppelelement 130 auf Zug beansprucht und dadurch die Antriebseinrichtung 120 in die angehobene Position 202 gemäß Pfeil 205 bewegt. Die Antriebseinrichtung 120 ist somit gegenüber der Längsverstelleinrichtung 110 in die angehobene Position 202 gestellt. Das Antriebsrad 124 ist außer Eingriff von der Unterschiene 116.

Die angehobene Position 202 (dargestellt in Figuren 7 und 9) der Antriebseinrichtung 120 wird sowohl über das dort verbaute Federelement 120.4, zum Beispiel einer Flip-Flop-Feder, als auch über das beispielsweise als Koppelstange ausgebildete Koppelelement 130 gehalten.

Das Federelement 120.4 genügt im Allgemeinen nicht allein, da Stöße, zum Beispiel beim Absetzen des ausgebauten Fahrzeugsitzes 100, ungewünscht zu einer Absenkung der Antriebseinrichtung 120 führen könnten. Um ein solches ungewünschtes Absenken der Antriebseinrichtung 120 zu vermeiden, wird die angehobene Position 202 zusätzlich über das Kopplungselement 130 zwischen Antriebseinrichtung 120 und Steuermodul 122 gesichert. Insbesondere kann zur Sicherung der angehobenen Position 202 der Antriebseinrichtung 120 das Steuermodul 122 in eine zugehörige dritte Steuerstellung 215, insbesondere einer entsprechenden Wippenstellung oder Hebelstellung, verriegelt sein. Das Koppelelement 130 kann darüber hinaus vorgespannt in der dritten Steuerstellung 215, insbesondere eine Endstellung des Steuermoduls 122, insbesondere auf Zug belastet, sein.

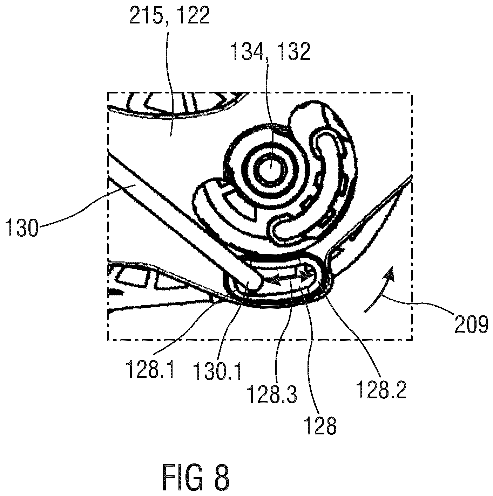

Zur Sicherung der angehobenen Position 202 der Antriebseinrichtung 120 ist das erste Koppelende 130.1 in Anlage an einem ersten Angreifpunkt 128.1 der Ausgleichsausnehmung 128, wie in Figur 8 dargestellt, spielfrei gehalten. Mit anderen Worten: Das Koppelelement 130 wird infolge der einwirkenden Antriebskraft, insbesondere einer Zugkraft oder Druckkraft, mit seinem ersten Koppelende 130.1 spielfrei in dem Angreifpunkt 128.1 und damit spielfrei auf der Antriebsseite gehalten. Insbesondere wird die Antriebseinrichtung 120 mittels der zuvor beschriebenen Kraftflusskette von dem Steckermodul 160 über das Steuermodul 122 und das Koppelelement 130 bis hin zu der Antriebseinrichtung 120 in die angehobene Position 202 gebracht und gesichert, insbesondere kraftgesichert, gehalten und dort in dieser dritten Steuerstellung 215 verriegelt.

Das Koppelelement 130 wird an dem ersten Angreifpunkt 128.1 (auch Antriebsseite genannt) im Anlenkpunkt oder Drehpunkt nahezu spielfrei gehalten. Insbesondere ein geringes Eigengewicht des Koppelelements 130 und auch das geringe Spiel innerhalb der Ausgleichsausnehmung 128 des Langlochs sorgen bei einer Verstellung des Steuermoduls 122, insbesondere einem Verschwenken, für ein geräuscharmes und klapperarmes Verstellen.

Figur 8 zeigt eine vergrößerte Draufsicht auf das Steuermodul 122 gemäß Figur 7 im Bereich der Ausgleichsausnehmung 128, welche die Ausgleichsbewegung 220 (dargestellt in Figur 4) durch die Angreifpunkte 128.1, 128.2 begrenzt.

Die Ausgleichsausnehmung 128 kann beispielsweise, insbesondere hinsichtlich Form und/oder Abmessungen, derart eingerichtet sein, dass am Anfang einer Montagebewegung des Steuermoduls 122 beim Einbau des Fahrzeugsitzes 100 an der Längsverstelleinrichtung 110 der Leerhub 128.3 bewirkt wird. Beispielsweise kann die Länge des Leerhubweges 128.3 der Länge der Ausgleichsausnehmung 128 entsprechen.

Bei der Entnahme oder beim Ausbau des Fahrzeugsitzes 100 wird das Steuermodul 122 durch das Steckermodul 160 (dargestellt in Figur 11), welches gemäß Pfeil 207 (dargestellt in Figur 7) in einer oberen, insbesondere einer obersten, Stellung gehalten und verriegelt ist, in einer in Bezug auf den Steuerarm 136 niedergedrückten Stellung gemäß Pfeil 206 gehalten und in dieser verriegelt ist, insbesondere über die Kopplung 138.2 (auch dargestellt in Figuren 2 und 11) zwischen Steuermodul 122 und Steckermodul 160 gedrückt gehalten.

Dabei wird das Steuermodul 122, wie in Figur 7 gezeigt und beschrieben, gemäß Pfeil 209 geschwenkt, wobei ein nicht näher dargestelltes Befestigungsmodul, insbesondere ein Exzenter des Befestigungsmoduls (auch Easy Mount Modul genannt) für den Fahrzeugsitz 100, das Steuermodul 122 gemäß Pfeil 206 am ersten Steuerarm 136 in Richtung der Längsverstelleinrichtung 110 niederdrückt. Insbesondere wird oder ist das Steckermodul 160 in die obere, insbesondere die oberste, Stellung gemäß Pfeil 207 angehoben und verbracht und dort verriegelt. Hiernach sorgen eine Steckerverriegelung und eine gebildete Kraftflusskette von dem angehobenen und verriegelten Steckermodul 160 über das gemäß Pfeil 209 geschwenkte und kraftbelastete Steuermodul 122 und das kraftbelastete, insbesondere zugbelastete oder druckbelastete, Koppelelement 130 bis zur Antriebseinheit 120 für eine, insbesondere kraftbelastete, Sicherstellung der angehobenen Position 202 der Antriebseinheit 120 und damit für eine kraftbelastete Arretierung der angehobenen Antriebseinheit 120. Das Koppelelement 130 ist dabei auf Zug oder Druck beansprucht.

Der eine erste Angreifpunkt 128.1 ist primär für das Anheben der Antriebseinrichtung 120 zuständig. Hier muss der erste Angreifpunkt 128.1 so auf den Schwenkwinkel des als Wippe oder Hebel ausgebildeten Steuermoduls 122 abgestimmt sein, dass die Antriebseinrichtung 120 nicht zu weit angehoben wird. Insbesondere ist die Ausgleichsausnehmung 128 und deren Angreifpunkte 128.1, 128.2 derart eingerichtet, dass es aufgrund der als Endanschläge ausgebildeten Angreifpunkte 128.1, 128.2 zu keiner Zerstörung/Verbiegung von im Kraftfluss liegenden Teilen, einschließlich des Koppelelements 130, kommen kann.

Andererseits darf der Hub gemäß Pfeil 205 (dargestellt in Figur 7) der Antriebseinrichtung 120 auch nicht zu gering ausfallen, um eine Verschmutzung des als Reibrad ausgebildeten Antriebsrades 124 einer möglicherweise nicht vollständig angehobenen Antriebseinrichtung 120 zu vermeiden und einen Kontakt des Antriebsrades 124 mit der Unterschiene 116 vor einer Verriegelung des Fahrzeugsitzes 100 mit den Befestigungen 118 (auch Schienengleiter des Easy Mount genannt) zu verhindern. Dieser frühzeitige Kontakt würde ein Verschieben des Fahrzeugsitzes 100 bis Erreichung der Verriegelung (= Easy-Lock) der Befestigungen 118 (dargestellt in Figur 1) erschweren.

Daher muss die Abstimmung des Leerhubes 128.3 (dargestellt zum Beispiel in Figur 2) genau erfolgen, damit ein toleranzbedingtes weiteres Absenken der Antriebseinrichtung 120 infolge einer Bewegung des Koppelelements 130 in die erste Richtung 222 (dargestellt in Figur 3) aufgrund einer Bewegung des Steuermoduls 122 nicht behindert wird. Abweichungen in die entgegengesetzte zweite Richtung 224 (dargestellt in Figur 3), welche zu einem Schub des Koppelelements 130 innerhalb der Ausgleichsausnehmung 128 führen, stellen kein Problem dar. Um den Toleranzausgleich der abgesenkten Antriebseinrichtung 120 zu gewähren und zusätzliche Systemkräfte zu vermeiden, ist das in der Ausgleichsausnehmung 128 liegende erste Koppelende 130.1, das zweifach abgewinkelte Ende, frei beweglich gelagert. Die zweifache Abwinkelung des ersten Koppelendes 130.1 ist derart eingerichtet, dass das erste Koppelende 130.1 auch in Querrichtung y und somit lateral genügend Spiel aufweist und dabei verliersicher gehalten ist.

Der andere, zweite Angreifpunkt 128.2 ist für das initiale Absenken der Antriebseinrichtung 120 und zur Überwindung der Totlage der Anfederung durch das Federelement 120.4 in der angehobenen Position 202 der Antriebseinrichtung 120 notwendig. Hierbei wird sichergestellt, dass genügend Spielraum für die Ausgleichsbewegung 220 der abgesenkten Antriebseinrichtung 120 gegeben ist und somit Ausgleichsbewegungen 220 ermöglicht sind.

Die Ausgleichsausnehmung 128 muss insbesondere derart eingerichtet sein, dass Ausgleichsbewegungen 220 auch bei einer Verkürzung des Abstandes zwischen Antriebseinrichtung 120 und Unterschiene 116 in die zweite Richtung 224 und damit bei der Festlegung des zweiten Angreifpunktes 128.2 berücksichtigt werden.

Figur 8 zeigt das Steuermodul 122 in der dritten Steuerstellung 215, durch welche die Antriebseinrichtung 120 in die angehobene Position 202 gebracht ist und das Antriebsrad 124 gegenüber der Unterschiene 116 der Längsverstelleinrichtung 110 angehoben ist, wie in Figur 7 dargestellt.

Die beiden Exzenter 120.1 und 120.3 sind entsprechend über das Koppelelement 130 (wie in Figuren 2 bis 7 dargestellt und beschrieben) verstellbar, um das Antriebsrad 124 anzuheben (wie in Figur 9 dargestellt) oder auf die Unterschiene 116 abzusenken (wie in Figur 10 dargestellt).

Wie in Figur 10 gezeigt, erfolgt die Kopplung des als Koppelstange ausgebildeten Koppelements 130 nur über einen der Exzenter 120.1. Die Bewegung auf den weiteren Exzenter 120.3 wird durch direkte Kopplung beider Exzenter 120.1, 120.3 über die Getriebeeinheit 120.5 (dargestellt in Figur 10) erreicht. Beispielsweise ist die Getriebeeinheit 120.5 als ein Zahnradgetriebe, insbesondere ein Stirnradgetriebe, zur gegensinnig drehbaren Kopplung der beiden Exzenter 120.1, 120.3 ausgebildet.

Zwischen den beiden Exzentern 120.1 und 120.3 ist das Federelement 120.4 zur Sicherung einer jeweiligen stabilen Endlage der beiden Exzenter 120.1 und 120.3 in den beiden Stellungen des Antriebsrades 124 vorgesehen.

Figur 10 zeigt eine Draufsicht auf die Antriebseinrichtung 120 in abgesenkter Position 200 des Antriebsrads 124 auf der Unterschiene 116 der Längsverstelleinrichtung 110.

Figur 11 zeigt die Antriebseinrichtung 120 und das Steuermodul 122, gekoppelt über das Koppelelement 130, sowie das auf das Steuermodul 122 einwirkende Steckermodul 160, das, wie zuvor anhand der Figuren 2 bis 10, insbesondere anhand von Figur 2, beschrieben, über die direkte Kopplung 138.2, insbesondere eine formschlüssige und/oder kraftschlüssige Verbindung, zum Beispiel eine Steckverbindung, eine Rastverbindung oder dergleichen, einwirkt zum Anheben der Antriebseinrichtung 120, insbesondere des Antriebsrades 124, bei einer Entnahme des Fahrzeugsitzes 100 von der Längsverstelleinrichtung 110.

Figur 11 zeigt das Steckermodul 160 im Kopplungseingriff an dem Steuermodul 122 über die direkte Kopplung 138.2.

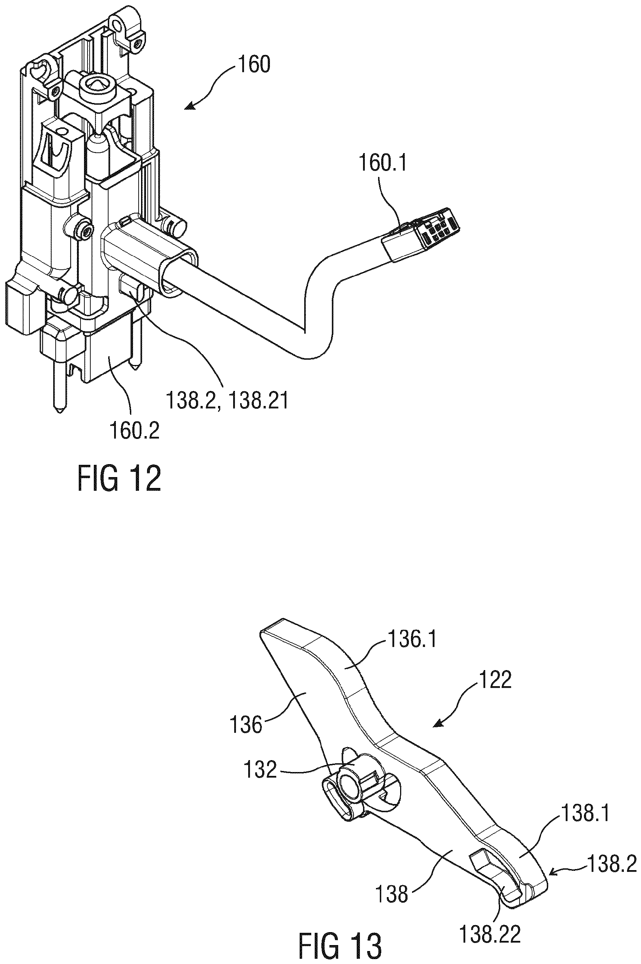

Figur 12 zeigt das Steckermodul 160 mit einem Buchsenanschluss 160.1 zum Anschließen einer Steuereinheit des Fahrzeugsitzes 100. Das Steckermodul 160 weist zudem einen Kombinationsanschluss 160.2 aus Stecker und Buchse zum Anschließen einer Stromversorgung, einer Steuereinheit oder dergleichen auf. Das Steckermodul 160 umfasst als eine Schnittstelle zur Bildung der direkten Kopplung 138.2 einen Kopplungsvorsprung 138.21, insbesondere einen Kopplungsstift, einen Kopplungspin, eine Kopplungsnase oder dergleichen.

Wie in Figur 13 beispielhaft gezeigt, kann das Steuermodul 122 als Gegenschnittstelle zur Bildung der direkten Kopplung 138.2 eine Kopplungsausnehmung 138.22, insbesondere einen Schlitz, ein Langloch, eine Öffnung, eine Ausnehmung, eine Nut oder dergleichen umfassen. Der Kopplungsvorsprung 138.21 und die Kopplungsausnehmung 138.22 weisen korrespondierende Formen und Abmessungen auf.

Figur 13 zeigt das Steuermodul 122 in perspektivischer Darstellung mit den Steuerarmen 136, 138, dem Gelenkpunkt 132 und den Steuerflächen 136.1, 138.1 sowie der direkten Kopplung 138.2.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 114: Erstes Schienenelement (Oberschiene)
- 116: Zweites Schienenelement (Unterschiene)
- 118: Befestigung
- 120: Antriebseinrichtung
- 120.1: Exzenter
- 120.2: Einhängepunkt
- 120.3: weiterer Exzenter
- 120.4: Federelement
- 120.5: Getriebeeinheit
- 122: Steuermodul
- 124: Antriebsrad
- 126: Reibfläche
- 128: Ausgleichsausnehmung
- 128.1: Angreifpunkt, erster Angreifpunkt
- 128.2: Angreifpunkt, zweiter Angreifpunkt
- 128.3: Leerhub
- 130: Koppelelement
- 130.1: erstes Koppelende
- 130.2: zweites Koppelende
- 132: Gelenkpunkt
- 134: Schwenkachse
- 136: Steuerarm
- 136.1: erste Steuerfläche
- 138: Steuerarm
- 138.1: zweite Steuerfläche
- 138.2: Kopplung
- 138.21: Kopplungsvorsprung
- 138.22: Kopplungsausnehmung
- 140: Feder
- 142: Hebel
- 160: Steckermodul
- 160.1: Buchsenanschluss
- 160.2: Kombinationsanschluss

- 200: abgesenkte Position
- 202: angehobene Position
- 204: Drehmoment
- 206: Pfeil
- 207: Pfeil
- 208: Pfeil
- 209: Pfeil
- 210: Pfeil
- 211: Pfeil
- 212: erste Steuerstellung
- 214: zweite Steuerstellung (Zwischenstellung)
- 215: dritte Steuerstellung
- 216: vertikale Abstandstoleranzen
- 218: Rotation
- 220: Ausgleichsbewegung
- 222: erste Richtung
- 224: zweite Richtung

- x: Längsrichtung
- y: Querrichtung
- z: Vertikalrichtung

## Patentansprüche

1. Fahrzeugsitz (100) in Kombination mit einer Längsverstelleinrichtung (110), die zumindest
- eine Schienenanordnung (112) mit einer festen Unterschiene (116) und einer zur Unterschiene (116) verstellbaren Oberschiene (114) umfasst, wobei der Fahrzeugsitz (100)
- mindestens ein durch eine Antriebseinrichtung (120) antreibbares Antriebsrad (124), das eingerichtet ist, auf einer dem Antriebsrad (124) zugewandten Reibfläche (126) der Unterschiene (116) abzurollen und die Oberschiene (114) relativ zu der Unterschiene (116) zu verstellen, sowie
- mindestens ein Steuermodul (122) umfasst, das zur Montage oder Demontage des Fahrzeugsitzes (100) an der Längsverstelleinrichtung (110) eingerichtet ist, wobei das Steuermodul (122) eingerichtet ist, die Antriebseinrichtung (120) in eine abgesenkte Position (200) oder in eine angehobene Position (202) zu bringen.

2. Fahrzeugsitz (100) nach Anspruch 1,
wobei das Steuermodul (122) eingerichtet ist, die Antriebseinrichtung (120) in die abgesenkte Position (200) für einen Antriebseingriff mit der Längsverstelleinrichtung (110) zu bringen.

3. Fahrzeugsitz (100) nach Anspruch 1 oder 2,
wobei das Steuermodul (122) und die Antriebseinrichtung (120) miteinander bewegungsgekoppelt sind.

4. Fahrzeugsitz (100) nach einem der vorhergehenden Ansprüche,
wobei bei einer Montage des Fahrzeugsitzes (100) an der Längsverstelleinrichtung (110) ein in Richtung der Längsverstelleinrichtung (110) wirkendes Drehmoment (204) am Steuermodul (122) über das Steuermodul (122) auf die Antriebseinrichtung (120) wirkt, so dass diese in die abgesenkte Position (200) auf die Längsverstelleinrichtung (110) stellbar ist.

5. Fahrzeugsitz (100) nach einem der vorhergehenden Ansprüche,
wobei das Steuermodul (122) mit einer Ausgleichsausnehmung (128) versehen ist.

6. Fahrzeugsitz (100) nach einem der vorhergehenden Ansprüche,
wobei in der abgesenkten Position (200) der Antriebseinrichtung (120) vertikale Abstandstoleranzen (216) zwischen der Antriebseinrichtung (120) und der Längsverstelleinrichtung (110) mittels des Steuermoduls (122) ausgleichbar sind.

7. Fahrzeugsitz (100) nach einem der vorhergehenden Ansprüche,
wobei in der abgesenkten Position (200) vertikale Bewegungen der Antriebseinrichtung (120) über die Kopplung von Antriebseinrichtung (120) und Steuermodul (122) in eine Ausgleichsbewegung (220) in der Ausgleichsausnehmung (128) übertragbar sind.

8. Fahrzeugsitz (100) nach einem der vorhergehenden Ansprüche,
wobei das Steuermodul (122) und die Antriebseinrichtung (120) mittels eines Koppelelements (130) miteinander bewegungsgekoppelt sind.

9. Fahrzeugsitz (100) nach Anspruch 8,
wobei das Koppelelement (130) in der Ausgleichsausnehmung (128) frei beweglich gelagert ist.

10. Fahrzeugsitz (100) nach Anspruch 8 oder 9,
wobei das Koppelelement (130) als ein Koppeldraht oder eine Koppelstange ausgebildet ist.

11. Fahrzeugsitz (100) nach einem der Ansprüche 8 bis 10,
wobei das Koppelelement (130) einerseits an dem Steuermodul (122) und andererseits an der Antriebseinrichtung (120) angelenkt ist.

12. Fahrzeugsitz (100) nach einem der Ansprüche 8 bis 11,
wobei das Koppelelement (130) an einem ersten, der Antriebseinrichtung (120) zugewandten Koppelende (130.1) ein einfach abgewinkeltes Halteende und an einem zweiten, gegenüberliegenden und dem Steuermodul (122) zugewandten Koppelende (130.2) ein zweifach abgewinkeltes Halteende aufweist.

13. Fahrzeugsitz (100) nach einem der vorhergehenden Ansprüche,
wobei bei einer Demontage des Fahrzeugsitzes (100) von der Längsverstelleinrichtung (110) die Antriebseinrichtung (120) mittels des Steuermoduls (122) in eine angehobene Position (202) bringbar, in der angehobenen Position (202) gehalten oder haltbar ist.

14. Fahrzeugsitz (100) nach Anspruch 13,
wobei die Antriebseinrichtung (120) mittels eines Federelements (120.4) und/oder mittels des Koppelelements (130) in der angehobenen Position (202) gehalten oder haltbar ist.

15. Fahrzeugsitz (100) nach Anspruch 13 oder 14,
wobei die Ausgleichsausnehmung (128) eingerichtet ist, ein Anheben der Antriebseinrichtung (120) in die angehobene Position (202) zu begrenzen.
